(19) Europäisches Patentamt
European Patent Office
Office européen des brevets

(11) EP 3 477 252 A1

(12) EUROPÄISCHE PATENTANMELDUNG

(43) Veröffentlichungstag:
01.05.2019 Patentblatt 2019/18

(51) Int Cl.:
G01B 11/24 (2006.01)     G01B 9/02 (2006.01)

(21) Anmeldenummer: 17198267.1

(22) Anmeldetag: 25.10.2017

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
MA MD

(71) Anmelder: Unity Semiconductor GmbH
01099 Dresden (DE)

(72) Erfinder:
• SROCKA, Bernd
  13125 Berlin (DE)
• SCHMIDT, Christine
  10557 Berlin (DE)
• LANGHANS, Ralf
  01109 Dresden (DE)

(74) Vertreter: Weisse, Renate
Bleibtreustrasse 38
10623 Berlin (DE)

(54) **ANORDNUNG ZUR ERFASSUNG DES OBERFLÄCHENPROFILS EINER OBJEKTOBERFLÄCHE MITTELS INTERFEROMETRISCHER ABSTANDSMESSUNG**

(57)  Eine Anordnung zur Erfassung des Oberflächenprofils einer Objektoberfläche mittels interferometrischer Abstandsessung, enthaltend eine Strahlungsquelle zur Erzeugung von monochromatischem Licht; eine optische Anordnung, mit welcher ein erster Teil des Lichts aus jeder Strahlungsquelle zur Reflexion auf einen Messbereich auf der Objektoberfläche leitbar und mit einem anderen, nicht an der Objektoberfläche reflektierten Teil des Lichts der Strahlungsquelle derart überlagerbar ist, dass Interferenz erzeugt wird; eine Detektoranordnung zum Detektieren der resultierenden Lichtstrahlen; und eine Signalauswerteeinheit zur Auswertung der so detektierten Interferometriesignale; ist dadurch gekennzeichnet, dass die optische Anordnung Mittel zum Abtrennen eines an dem gleichen Messbereich der Objektoberfläche reflektierten Teils des Lichts aus der Strahlungsquellen ohne Interferenz aufweist; eine Detektoranordnung zum Detektieren der nicht-interferierenden Lichtstrahlen vorgesehen ist; wobei die von der Detektoranordnung zum Detektieren der von nicht-interferierenden Lichtstrahlen erzeugten Reflexionssignale der Signalauswerteeinheit zuführbar sind.

Fig. 1

## Beschreibung

### Technisches Gebiet

Die Erfindung betrifft eine Anordnung zur Erfassung des Oberflächenprofils einer Objektoberfläche mittels interferometrischer Abstandsessung, enthaltend

(a) eine Strahlungsquelle zur Erzeugung von monochromatischem Licht;
(b) eine optische Anordnung, mit welcher ein erster Teil des Lichts aus jeder Strahlungsquelle zur Reflexion auf einen Messbereich auf der Objektoberfläche leitbar und mit einem anderen, nicht an der Objektoberfläche reflektierten Teil des Lichts der Strahlungsquelle derart überlagerbar ist, dass Interferenz erzeugt wird;
(c) eine Detektoranordnung zum Detektieren der resultierenden Lichtstrahlen; und
(d) eine Signalauswerteeinheit zur Auswertung der so detektierten Interferometriesignale.

Bei der Interferometrie werden die Wellen, beispielsweise Lichtwellen überlagert. Die Überlagerung von Licht unterschiedlicher Phase führt zu Interferenzerscheinungen. An einigen Stellen löschen sich die interferierenden Strahlen gegenseitig aus. Das wird als destruktive Interferenz bezeichnet. An anderen Stellen verstärken sich die Wellen. Das wird als konstruktive Interferenz bezeichnet. Die Intensität der resultierenden Strahlung wird moduliert.

Werden zwei Strahlen überlagert, von denen einer an einer Oberfläche reflektiert wurde und der andere nicht, dann haben die Strahlen einen Gangunterschied, der von der Profilhöhe der Oberfläche abhängt. Der Gangunterschied führt bei ansonsten gleichen Bedingungen zu einem Intensitätsunterschied am Detektor, mit dem die resultierende Strahlung erfasst wird. Die Intensität kann folglich ein sehr empfindliches Maß für die Profilhöhe darstellen.

Dies gilt aber nur solange das Profil keine größeren Höhenunterschiede aufweist. Die Messung ist aufgrund der Periodizität des resultierenden Interferenzsignals mehrdeutig, wenn die Höhenunterschiede größer als eine halbe Wellenlänge sind.

### Stand der Technik

In verschiedenen Industriezweigen werden flächige Produkte mit optischen, bildgebenden Verfahren auf ihr Oberflächenprofil hin untersucht. In der Halbleiterindustrie sind dies unter anderem Wafer. Wafer sind Scheiben aus Halbleiter-, Glas-, Folien- oder Keramikmaterialien. Die Wafer werden in bestimmten Anwendungen typischerweise ganzflächig oder zumindest auf großen Teilflächen geprüft. Auf den Wafern werden die Schaltkreise "Chips" hergestellt, die später vielfältige Aufgaben in elektronischen Geräten der der Rechentechnik, Sensorik, Steuerung und Überwachung erfüllen. Zur elektrischen Kontaktierung der Schaltkreise wurden in herkömmlichen Verfahren Drähte vom Chip-Gehäuse auf den Chip geführt und dort auf metallischen Kontaktflächen befestigt.

Es ist ferner bekannt, die Kontakte durch das Aufbringen von Lötzinnkugeln auf den Chip herzustellen. Dies erfolgt noch während sich der Chip noch im Waferverbund befindet. Die Kontakte werden vor dem Zersägen des Wafers hergestellt. Diese Kontakte können über die gesamte Chipfläche verteilt werden. Dies wird als "Ball Grid Arrays" bezeichnet.

Die Kontaktierung erfolgt durch Einsetzen des Chips in ein entsprechend mit Kontaktflächen versehenes Gehäuse. Durch Erwärmung und Druck wird das Lötzinn angeschmolzen und der Kontakt hergestellt. Für die erfolgreiche Kontaktierung nach diesem Verfahren ist die gleichmäßige Höhe der Lötzinn-Kontaktkugeln von entscheidender Bedeutung.

In neueren Verfahren werden auch Kupferzylinder verwendet, welche mit einer dünnen Lötzinnkappe versehen sind. Die Kontaktstrukturen sind noch kleiner und können dichter platziert werden. Die Lötzinnkappe dient der elektrischen Kontaktherstellung beim Einsetzen in den Chipträger in Form eines Gehäuses.

Da das Kupfer weniger duktil als Lötzinn ist, erlaubt seine Verwendung geringere Höhentoleranzen. Es ist daher erforderlich, die Höhenprofile von Schaltkreisen mit Lötzinnkugeln oder Kupferzylindern präzise und vollständig zu erfassen.

Bekannte Verfahren für die Höhenvermessung nutzen Punktsensoren, Zeilensensoren oder Flächensensoren. Flächige Sensoren haben bei Weißlichtinterferometern oder strukturierter Beleuchtung den Vorteil, dass sie eine Fläche im Ganzen erfassen.

Bei der Weißlichtinterferometrie wird eine Serie von Aufnahmen mit unterschiedlichen Abständen zum Objekt oder zum Interferometerspiegel aufgenommen. Dies ist für eine vollflächige Inspektion eines Wafers zu langsam. Bei der strukturierten Beleuchtung wird die erforderliche laterale und Höhenauflösung für kleine Kontakte nicht mehr erreicht.

Zeilensensoren nutzen z.B. Triangulation, Stereometrie oder chromatische Konfokalsensorik. Jedes dieser Verfahren weist beim Übergang zu kleinen Kontakten Messartefakte auf. Die Messartefakte machen eine hinreichend exakte Messung unmöglich oder zu langsam. Bei bekannten Punktsensoren ist eine sehr genaue Positionierung auf der Kontaktstruktur erforderlich. Da die Genauigkeit der lateralen Platzierung der Kontakte in der Größenordnung der Auflösung der Sensoren liegt, ist dies zeitaufwändig. Das Verfahren ist stark fehlerbehaftet.

In der Veröffentlichung "Multi-Wavelength Interferometry for Length Measurements Using Diode Lasers" von K.Meiners-Hagen, R. Schrödel, F. Pollinger und A. Abou-Zeid in Measurement Science Review, Volume 9, Section 3, No. 1 aus 2009 wird eine Anordnung beschrieben, bei der Interferenz auf zwei Wellenlängen erzeugt wird. Die Anordnung misst Interferenzsignale am gleichen Messpunkt für zwei verschiedene Wellenlängen. Dadurch kann der Messbereich, in dem eindeutige Ergebnisse erreicht werden, vergrößert werden. Ein nicht eindeutiges Messergebnis auf einer Wellenlänge kann durch ein Messergebnis auf der anderen Wellenlänge zu einem eindeutigen Messergebnis korrigiert werden.

Problematisch ist es bei dieser Art der Messung, wenn sich der Reflexionsgrad entlang Objektoberfläche ändert. Dies ist beispielsweise der Fall, wenn die Objektoberfläche unterschiedliche Materialien aufweist.

Typischerweise haben aktuelle Kontaktstrukturen Durchmesser von einigen 10 $\mu$m. Das Verhältnis von Höhe zu Durchmesser (Aspektverhältnis) liegt meist im Bereich um 1. Das oben beschriebene Interferenzverfahren mit zwei Wellenlängen liefert schnell und präzise Ergebnisse. Es ist aber für die Anwendung bei Wafern mit verschiedenen Materialien, etwa den beschriebenen Kupferzylindern, ungeeignet.

**Offenbarung der Erfindung**

Es ist Aufgabe der Erfindung, eine Vorrichtung der eingangs genannten Art zu schaffen, die eine schnelle und präzise Messung von Höhenprofilen auch für Strukturen unterschiedlicher Materialien erlaubt.

Erfindungsgemäß wird die Aufgabe dadurch gelöst, dass

(e) die optische Anordnung Mittel zum Abtrennen eines an dem gleichen Messbereich der Objektoberfläche reflektierten Teils des Lichts aus der Strahlungsquellen ohne Interferenz aufweist;

(f) eine Detektoranordnung zum Detektieren der nicht-interferierenden Lichtstrahlen vorgesehen ist; wobei

(g) die von der Detektoranordnung zum Detektieren der von nicht-interferierenden Lichtstrahlen erzeugten Reflexionssignale der Signalauswerteeinheit zuführbar sind.

Dabei kann in besonders vorteilhafter Weise ein erweiterter Arbeitsbereich erhalten werden, wenn

(a) zusätzlich zu der ersten Strahlungsquelle zur Erzeugung von monochromatischem Licht bei einer ersten Wellenlänge, wenigstens eine weitere Strahlungsquelle zur Erzeugung von monochromatischem Licht bei wenigstens einer weiteren, zur ersten Wellenlänge unterschiedlichen Wellenlänge vorgesehen ist;

(b) mit der optischen Anordnung ein erster Teil des Lichts aus jeder Strahlungsquelle zur Reflexion auf einen Messbereich auf der Objektoberfläche leitbar und mit einem anderen, nicht an der Objektoberfläche reflektierten Teil des Lichts der jeweils zugehörigen Strahlungsquelle derart überlagerbar ist, dass Interferenz erzeugt wird;

(c) Mittel zum Trennen der resultierenden Lichtstrahlen unterschiedlicher Wellenlängen vorgesehen sind;

(d) mit der Detektoranordnung die nach Wellenlängen getrennten, resultierenden Lichtstrahlen detektierbar sind;

(e) die optische Anordnung Mittel zum Abtrennen eines an dem gleichen Messbereich der Objektoberfläche reflektierten Teils des Lichts aus allen Strahlungsquellen ohne Interferenz aufweist;

(f) Mittel zum Trennen der reflektierten, nicht-interferierenden Lichtstrahlen unterschiedlicher Wellenlängen vorgesehen sind; und

(g) mit der Detektoranordnung die nach Wellenlängen getrennten, nicht-interferierenden Lichtstrahlen detektierbar sind; wobei

(h) die von der Detektoranordnung zum Detektieren der von nicht-interferierenden Lichtstrahlen erzeugten Reflexionssignale der Signalauswerteeinheit zuführbar sind.

Jeder monochromatische Lichtstrahl wird aufgeteilt: ein erster Teil wird zur Oberfläche des Objekts geleitet. Dort wird der Lichtstrahl reflektiert. Der reflektierte Teil des Lichtstrahls wird mit dem übrigen Teil des Lichtstrahls aus der gleichen Strahlungsquelle überlagert, der nicht an der Oberfläche des Objekts reflektiert wurde. Die beiden Lichtstrahlen haben einen Gangunterschied. Die Intensität des so erzeugten, resultierenden Lichtstrahls ist aufgrund der Interferenz moduliert. Aus der an einem Detektor gemessenen Intensität des resultierenden Lichtstrahls kann die Profilhöhe der Objektoberfläche im Messbereich ermittelt werden.

Aus der Intensitätsmessung eines durch Interferometrie modulierten Signals kann mit sehr hoher Auflösung eindeutig der Abstand zur Objektoberfläche ermittelt werden. Dies gilt jedoch nur innerhalb eines Abstands-Arbeitsbereiches von einer halben Wellenlänge des Lichtes. Außerhalb dieses Bereiches wird der Zusammenhang zwischen Intensität und Abstand mehrdeutig, da aus der Signalintensität allein nicht unmittelbar ermittelt werden kann, wie viele Perioden der Gangunterschied zwischen den beiden Lichtstrahlen mit und ohne Reflexion an der Objektoberfläche beträgt.

Es kann ein Interferenzsignal und Reflexionssignal für nur eine Wellenlänge erzeugt werden. Vorteilhafterweise wird aber monochromatisches Licht bei verschiedenen Wellenlängen verwendet. Monochromatisch bedeutet hier, dass das Licht nur aus Lichtstrahlen einer Wellenlänge besteht. Außerdem ist für die Entstehung der genutzten Interferenz erforderlich, dass die Kohärenzlänge des Lichtes mindestens so groß ist, wie der Arbeitsbereich, in dem die Profilhöhen ermittelt werden. Durch Verwendung von mehreren Strahlungsquellen mit verschiedenen Wellenlängen wird der Arbeitsbereich der Höhenprofile erweitert, in dem eine eindeutige Zuordnung der Intensität zur Profilhöhe der Objektoberfläche vorliegt.

Mit zwei oder mehr unterschiedlichen Wellenlängen lässt sich der Arbeitsbereich, in dem die Messung ohne Start-Referenz und Periodenzählung eindeutig erfolgen kann, erweitern. Die verschiedenen Wellenlängen weisen eine unterschiedliche Periodizität auf. Aus der Kombination beider Signale kann daher in einem weiteren Bereich eine eindeutige Messung erfolgen.

Die Grundlagen eines solchen Verfahrens sind in der eingangs erwähnten Publikation "Multi-Wavelength Interferometry for Length Measurements Using Diode Lasers" von K. Meiners-Hagen et al. dargestellt. Der unmittelbar erfassbare Arbeitsbereich A beträgt für zwei Wellenlängen $\lambda_1$ und $\lambda_2$:

$$A = {}^{\Lambda}\!/_2 = \frac{1}{2} * \frac{\lambda_1 * \lambda_2}{\lambda_2 - \lambda_1}$$

Betrachtet man nicht nur den Gesamtintensitätsverlauf der synthetisierten Wellenlänge A sondern die beiden Wellenlängen $\lambda_1$ und $\lambda_2$ jeweils für sich, lässt sich der Arbeitsbereich A auf ein Vielfaches der Wellenlängen $\lambda_1$ und $\lambda_2$ ausdehnen. Dies ist die Methode der exakten Phasenbruchteile, die ebenfalls in der o.g. Publikation beschrieben ist.

Mit anderen Worten: Wenn die Profilhöhe mehr als eine halbe Wellenlänge variiert, ist das Messergebnis aufgrund der Periodizität der Lichtwellen nicht mehr eindeutig. Eine Messung mit einer oder mehreren weiteren Wellenlängen ermöglicht die Erweiterung des Arbeitsbereichs. Jedem Intensitätsmesswert wird ein Wertetupel an möglichen Längen zugeordnet. Je geringer die Wellenlängendifferenz zwischen den gewählten Wellenlängen ist, umso größer ist die Periodizität der Wertetupel und damit der Bereich mit eindeutiger Zuordnung einer Intensität zu einer Länge.

Die Zuordnung ist nur solange richtig, wie sich der Reflexionsgrad der Objektoberfläche beispielsweise durch Materialänderungen nicht ändert. Das Verfahren ist für eine Höhenmessung auf einem Wafer daher nicht einsetzbar, da die Intensität der gemessenen Interferometriesignale zusätzlich vom Material der zu messenden Struktur und ihrer Umgebung abhängt. Ohne die Kenntnis des lokalen Reflexionsgrades im Messbereich kann keine Aussage zum Abstand getroffen werden.

Die vorliegende Erfindung sieht daher vor, dass ein Teil des an der Objektoberfläche reflektierten Lichts abgetrennt wird und ohne Interferenz detektiert wird. Die gemessene Intensität ändert sich nur mit dem Reflexionsgrad, nicht aber mit der Profilhöhe. Auf diese Weise kann der Reflexionsgrad bei jeder der Wellenlängen erfasst und bei der Ermittlung der Profilhöhe der Objektoberfläche berücksichtigt werden.

Mit Hilfe der gleichzeitig gemessenen Reflexionsgrade können die Interferomtriesignale jedes für sich korrigiert werden. Die Materialabhängigkeit wird dadurch eliminiert. Anschließend kann innerhalb des eindeutigen Arbeitsbereiches der Abstand für jeden erfassten Messbereich einzeln berechnet werden. Es entsteht somit ein präzises Abstandsbild der Oberfläche.

Mit der erfindungsgemäßen Anordnung können Profile von bis zu einigen $100\,\mu m$ Höhe mit einer Auflösung bis unterhalb $0,1\,\mu m$ erfasst werden. Dies ist insbesondere bei den eingangs beschriebenen Chips sinnvoll. Analoge Aufgabenstellungen bestehen auch für andere Strukturen und in anderen Industriezweigen. Solche Aufgaben sind z.B. die Vermessung der Höhe von Leiterbahnen der obersten Verdrahtungsebene, die Vermessung von Strukturen auf Elektronik-Boards und Leiterplatten oder die Vermessung einer Vielzahl von mechanisch-elektrischen Systemkomponenten (MEMS) wie Drucksensoren, Geschwindigkeitssensoren oder Gyroskope.

Die erfindungsgemäße Anordnung erfüllt den Bedarf an schneller Prüfung einer hohen Anzahl von in der Regel gleichartigen Prüflingen. Solche Objekte sind Leiterplatten, Wafer, Displays und dergleichen. Bei den Anwendungen erfolgt der Einsatz von Sensoren zur Erzeugung von Profil- und/oder Höhendaten der untersuchten Strukturen.

Die Anordnung ermöglicht bei geeigneter Beleuchtung des Messbereichs auf der Objektoberfläche und bei Verwendung eines geeigneten Zeilen- oder Flächendetektors die simultane Messung an mehreren Punkten. Anders als beispielsweise bei der Weißlichtinterferometrie wird das Messergebnis bereits durch eine einzige Messung bei verschiedenen Wellenlängen erreicht, ohne dass Objekt oder Detektor bewegt werden müssen. Dadurch wird die Messung erheblich beschleunigt.

Vorzugsweise ist eine Aufnahmevorrichtung zur Aufnahme eines Objekts in Form eines Wafers oder eines anderen flachen Objekts mit einer ebenen Objektoberfläche vorgesehen. In der Aufnahmevorrichtung kann das flache Objekt gerade so positioniert werden, dass die Objektoberfläche mit dem Messlicht in gewünschter Weise beleuchtet wird.

Die Strahlungsquellen können von Lasern gebildet sein. Laser bilden eine hinreichend monochromatische Lichtquelle mit hoher Strahlungsintensität. Wegen ihrer hohen Strahlungsintensität innerhalb eines sehr kleinen Wellenlängenbereichs sind Laser als Strahlungsquellen für die vorliegende Erfindung besonders geeignet. Es ist aber auch möglich, eine spektral breitbandige Strahlungsquelle zu verwenden und diese mit einem Spektralfilter zu versehen. Die Verwendung mehrerer Spektralfilter ermöglicht es, mehrere Wellenlängen aus einer Strahlungsquelle zu erzeugen.

Insbesondere kann bei der Erfindung vorgesehen sein, dass die Strahlungsquellen Licht bei Wellenlängen erzeugen, bei denen keine Wellenlänge ein ganzzahliges Vielfaches der Wellenlänge einer der anderen Strahlungsquellen ist. Eine Wellenlänge ist beispielsweise nicht genau das Doppelte der Wellenlänge einer anderen Strahlungsquelle. Je geringer Differenz der Wellenlängen umso größer wird der Arbeitsbereich. Allerdings ist in der Praxis zu berücksichtigen, dass die Strahlungsbündel nie völlig monochromatisch sind und immer eine Bandbreite haben, welche bei der Auswahl der Wellenlängen zu berücksichtigen ist.

Die Mittel zum Trennen von Lichtstrahlen unterschiedlicher Wellenlängen können ein oder mehrere Prismen, ein oder mehrere Spektralgitter, andere spektral dispergierende Mittel oder deren Kombinationen umfassen. Das hat den Vorteil, dass alle Signale simultan aufgenommen werden können. Es ist aber auch möglich, die Strahlung bei unterschiedlichen Wellenlängen zeitlich versetzt aufzunehmen. Dann erfolgt die Trennung nicht spektral, sondern zeitlich unter Inkaufnahme einer etwas längeren Messzeit.

Bei einer bevorzugten Ausgestaltung der Erfindung ist vorgesehen, dass die Detektoranordnung zum Detektieren der nach Wellenlängen getrennten, nicht-interferierenden Lichtstrahlen von einer anderen Detektoranordnung gebildet ist, als die Detektoranordnung zum Detektieren der nach Wellenlängen getrennten, resultierenden Lichtstrahlen. Die aus interferierenden Strahlen resultierende Strahlung wird dabei an einem Detektor erfasst und die reflektierte Strahlung zur Messung des Reflexionsgrads des Messbereichs mit einem anderen.

Es kann vorgesehen sein, dass jede der Detektoranordnungen eine Detektorzeile und Antriebsmittel zur Bewegung der Detektorzeile in der Detektionsebene senkrecht zur Längsrichtung der Detektorzeile umfasst. Dann wird die Oberfläche mit der Detektorzeile abgescannt. Die Objektoberfläche kann dann mit der Zeilenbreite simultan vermessen werden. Alternativ können auch eine oder mehrere Flächenkameras oder mehrere Zeilen verwendet werden. Zeilen haben den Vorteil, dass sie schneller ausgelesen werden können als Flächenkameras.

Eine besonders bevorzugte Ausgestaltung der Erfindung sieht vor, dass jede der Detektoranordnungen eine Time Delayed Integration (TDI) Zeilenkamera umfasst. Die Zeilenkamera kann im Area-Mode, also wie eine normale Flächenkamera benutzt werden. Dadurch kann die große Breite der TDI-Detektorzeile von z.B. 16384 Pixeln für einen hohen Durchsatz genutzt werden und gleichzeitig stehen die z.B. 48, 96 oder 256 Zeilen der TDI für die gleichzeitige, separate Aufnahme der verschiedenen Wellenlängen zur Verfügung. Damit wird eine schnelle und präzise Messung ermöglicht.

Besonders vorteilhaft ist es dabei, dass eine breite Sensorfläche mit wenigen Zeilen in Scanrichtung zur Verfügung steht. Die Breite spiegelt den gleichzeitig messbaren Bereich einer Richtung senkrecht zur Scanrichtung wieder. In Scanrichtung sind nur wenige Zeilen zum Aufnehmen der verschiedenen Wellenlängenbündel erforderlich.

Übliche Flächenkameras sind eher quadratisch oder mit üblichen Fotoformaten, z.B. 6:9. Eine typische TDI hat z.B. 96x 16000 Pixel. Die 96 Zeilen reichen für die Messung bei 3 Wellenlängen völlig aus. Die 16000 Pixel können in der Breite senkrecht zur Scanrichtung genutzt werden. Trotzdem wird eine hohe Auslesefrequenz erreicht. Hierbei wird die TDI im sogenannten Area-Mode ähnlich wie eine Flächenkamera genutzt. Dabei werden die Signale der 96 Zeilen nicht, wie im normalen (TDI-) Betrieb im Takt der Belichtung aufsummiert und gleichzeitig verschoben. Entsprechend werden Signale für beispielsweise 96 Zeilen und nicht nach 96 Schritten ein einzeiliges Signal erzeugt, was der Fall wäre, wenn die 96 Zeilen integriert werden.

Bei einer Ausgestaltung der Erfindung ist wenigstens ein dichroitischer Spiegel zum Vereinigen des Lichts aus den Strahlungsquellen in einem gemeinsamen Bündel vorgesehen. Die Strahlung einer Wellenlänge wird an dem dichroitischen Spiegel von einer Seite durchgelassen. Die Strahlung einer anderen Wellenlänge wird an dem dichroitischen Spiegel von der anderen Seite reflektiert. Bei geeignetem Winkel ist die Ausbreitungsrichtung der abgehenden Strahlen für beide Wellenlängen gleich. Werden mehr als zwei Strahlungsquellen mit mehreren Wellenlängen verwendet, können weitere dichroitische Spiegel zum Einkoppeln in den Strahlengang verwendet werden.

Insbesondere kann vorgesehen sein, dass die optische Anordnung zur Erzeugung von Interferenz einen halbdurchlässigen Spiegel umfasst, welcher einen Teil der Strahlung an einer ersten Oberfläche in Richtung auf die Objektoberfläche reflektiert und einen anderen Teil der Strahlung durchlässt. Die reflektierte Strahlung kann anschließend mit dem durchgelassenen Strahl vereinigt werden. Dies kann beispielsweise erfolgen, indem der durchgelassene Strahl an einem Spiegel in sich zurückreflektiert wird und an dem halbdurchlässigen Spiegel in den reflektierten Strahl eingekoppelt wird.

Bei einer weiteren Ausgestaltung der Erfindung ist vorgesehen, dass die Mittel zum Abtrennen eines reflektierten Teils des Lichts ohne Interferenz eine Lichtfalle, etwa eine angeschrägte, schwarze Fläche, oder einen Spiegel umfassen, welche einen Teil des Bündels des nicht an der Objektoberfläche reflektierten Lichts aus dem Strahlengang entfernt, während ein anderer Teil des Bündels des nicht an der Objektoberfläche reflektierten Lichts mit einem Teil des an der Objektoberfläche reflektierten Lichts überlagert wird und ein Spiegel vorgesehen ist, mit welchem ein anderer Teil des an der Objektoberfläche reflektierten Lichts vom resultierenden Lichtstrahl trennbar ist. Bei einer solchen Ausgestaltung wird ein Teil des Bündels, das nicht auf die Objektoberfläche geleitet wird, vollständig aus dem Strahlengang entfernt. Entsprechend wird das nichtreflektierte Bündel nicht vollständig mit einem reflektierten Bündel überlagert, sondern nur ein Teil desselben. Der nicht interferierende Teil dient zur Messung des Reflexionsgrades des Messbereichs auf der Objektoberfläche.

Ausgestaltungen der Erfindung sind Gegenstand der Unteransprüche. Ein Ausführungsbeispiel ist nachstehend unter Bezugnahme auf die beigefügten Zeichnungen näher erläutert.

**Kurze Beschreibung der Zeichnungen**

Fig.1 ist eine schematische Darstellung einer Anordnung zur interferometrischen Abstandsmessung mit drei Laserlichtquellen.

Fig.2 ist eine schematische Darstellung eines Strahlquerschnitts.

Fig.3 illustriert das Verfahren zur Einrichtung der Interferometrieanordnung und interferometrischen Abstandsmessung.

Fig.4 illustriert die vom Licht zurückgelegten Weglängen und die zugehörige Richtung in einem vergrößerten Ausschnitt aus Figur 1.

Fig.5 ist eine schematische Darstellung der Oberfläche einer ersten TDI-Kamera.

Fig.6 ist eine schematische Darstellung der Oberfläche einer zweiten TDI-Kamera.

Fig.7 zeigt ein Profil einer Probenoberfläche, die mit den Detektoranordnungen einer Anordnung aus Figur 1 an dieser Probenoberfläche gemessenen Reflexions- und Interferenzsignale und ein daraus errechnetes Profil.

**Beschreibung des Ausführungsbeispiels**

Aufbau und Strahlengang

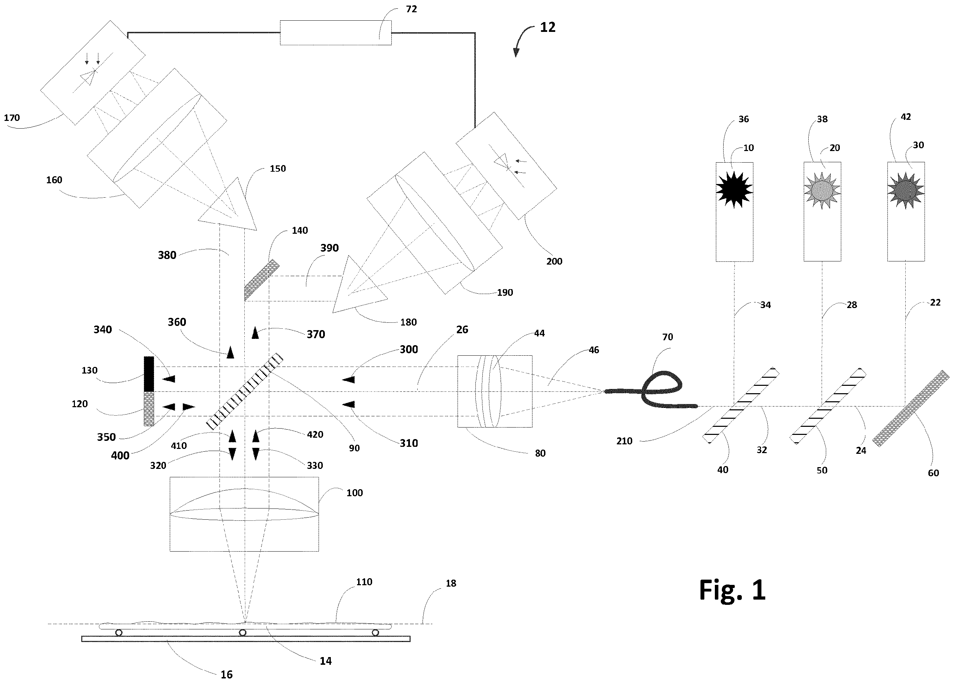

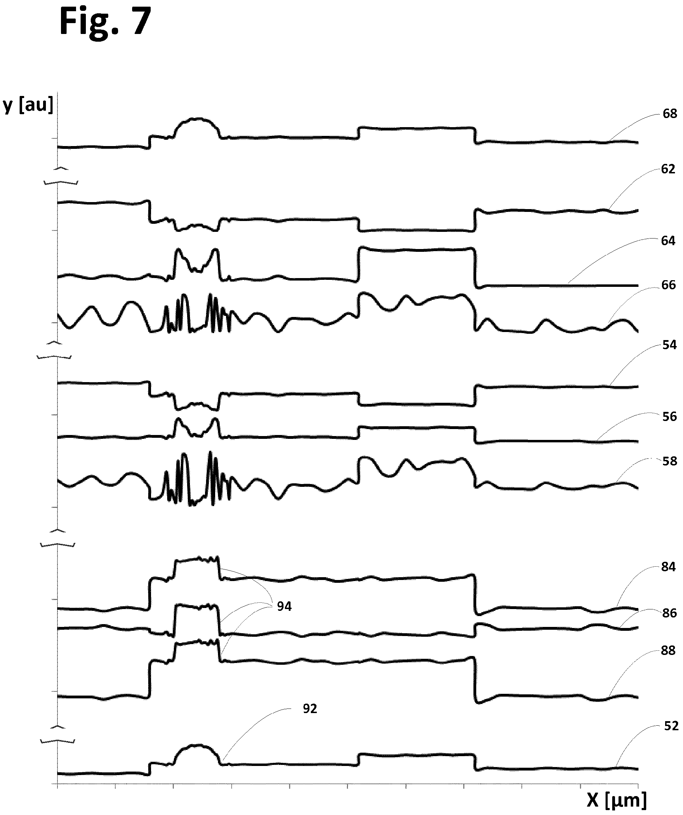

Figur 1 zeigt eine allgemein mit 12 bezeichnete Anordnung zur Erfassung des Oberflächenprofils 52 einer Objektoberfläche 110 mittels interferometrischer Abstandsmessung. Im vorliegenden Ausführungsbeispiel wird das Profil der Oberfläche 110 eines Wafers 14 untersucht. Es versteht sich, dass statt eines Wafers auch andere flache Objekte untersucht werden können. Ein Beispiel für ein Profil 52 ist in Figur 7 gezeigt.

Der Wafer 14 wird in einer Aufnahme 16 gehalten. Die Aufnahme 16 ist ein handelsüblicher Waferteller oder dergleichen und braucht daher hier nicht näher beschrieben zu werden. Die Aufnahme 16 ist mit einem Antrieb (nicht dargestellt) versehen. Mit der Aufnahme 16 wird der Wafer in der Objektebene 18 der nachstehend beschriebenen Zeilenkameras 170 und 200 bewegt. Die Kameras 170 und 200 sind im vorliegenden Ausführungsbeispiel stationär.

Bei einem alternativen Ausführungsbeispiel werden die Kameras 170 und 200 bewegt. In einem weiteren Ausführungsbeispiel wird die Relativbewegung auf Kameras 170 und 200 und Objekt aufgeteilt. Dabei können zum Beispiel die Kameras 170 und 200 die Bewegung in einer ersten Achsenrichtung ausführt, während das Objekt 14 in der dazu senkrechten Richtung bewegbar ist. Die Bewegung zwischen Kameras 170 und 200 und Objekt 14 ist im vorliegenden Ausführungsbeispiel kontinuierlich. Es ist aber auch möglich, eine schrittweise Bewegung durchzuführen.

Die Anordnung 12 umfasst drei monochromatische Strahlungsquellen 10, 20 und 30. Die Strahlungsquellen 10, 20 und 30 sind von Lasern, beispielsweise Diodenlasern gebildet.

Jeder der Laser 10, 20 und 30 emittiert Strahlung bei einer anderen Wellenlänge $\lambda$ als die jeweils anderen Laser. Die Wellenlängen der Laser 10, 20 und 30 sind so ausgewählt, dass keine Wellenlänge ein ganzzahliges Vielfaches einer anderen Wellenlänge ist. Die spektrale Bandbreite der Laserstrahlung ist schmal genug, dass es keinen Überlappungsbereich zwischen der Laserstrahlung aus den Lasern 10, 20 und 30 gibt. Außerdem ist vorgesehen, dass die Interferenzsignale eine maximale Modulation zeigen. Die Modulation würde bei Verwendung von Quellen mit breiteren Wellenlängenbereichen verbreitert und in ihrer Amplitude reduziert.

Die Laserstrahlung 22 des Lasers 30 wird unter einem Winkel von 45° auf einen Planspiegel 60 gelenkt. An dem Planspiegel 60 wird die Strahlung 22 reflektiert. Die reflektierte Strahlung 24 wird in einen Lichtleiter 70 eingekoppelt.

Parallel zum Spiegel 60 sind vor dem Eingang des Lichtleiters 70 zwei dichroitische Spiegel 40 und 50 im Strahlengang des reflektierten Laserstrahls 24 angeordnet. Die dichroitischen Spiegel 40 und 50 sind derart ausgebildet, dass der Laserstrahl 24 gut transmittiert wird. Über den dichroitischen Spiegel 50 wird ein Laserstrahl 28 des Lasers 20 in den Strahlengang des Laserstrahls 24 eingekoppelt. Der dichroitische Spiegel 50 ist derart ausgebildet, dass der Laserstrahl 28 an ihm gut reflektiert wird. Der am Spiegel 50 reflektierte Laserstrahl 32 läuft im Strahlengang des reflektierten Laserstrahls 24. Auf gleiche Weise wird die Laserstrahlung 34 des Lasers 10 in den Strahlengang der reflektierten Laserstrahlen 24 und 32 eingekoppelt. Der Strahl 210, der in den Lichtleiter 70 eingekoppelt wird, setzt sich also aus der Laserstrahlung der drei Laser 10, 20 und 30 zusammen.

Jeder der Laser 10, 20 und 30 ist in üblicher Weise auf der dem Ausgang des Lasers abgewandten Seite 36, 38 und 42 des Lasermediums mit einer Monitordiode (nicht dargestellt) versehen. Die Ausgangsintensität jedes Lasers kann mit Hilfe dieser Monitordiode detektiert werden. Die mit den Monitordioden erhaltenen Messwerte können in die nachstehend beschriebene Rechnung als Korrektur- bzw. Referenzwert einfließen.

Der Lichtleiter 70 ermöglicht die Entkopplung der Laseranordnung mit den Lasern 10, 20 und 30 von der eigentlichen Messanordnung. Es ist aber auch möglich, die Strahlung 210 mit oder ohne weitere optische Elemente direkt in die nachfolgend beschriebene Messanordnung zu überführen. Dadurch werden Intensitätsverluste reduziert. Die direkte Einkopplung erfordert einen höheren Justageaufwand.

Die auf diese Weise zusammengeführte, aus dem Lichtleiter 70 austretende Strahlung 46 wird in einer geeigneten Strahlformungsoptik 80 gebündelt. Im vorliegenden Ausführungsbeispiel sind schematisch Linsen 44 als Strahlformungsoptik 80 illustriert. Es ist aber ebenfalls möglich Spiegel zu verwenden.

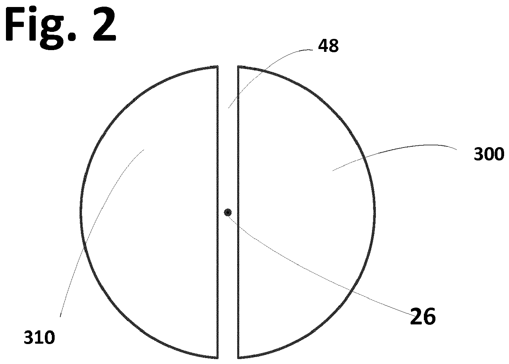

Mit der Strahlformungsoptik 80 wird der Strahl 46 zu einem parallelen Lichtbündel bestehend aus zwei Teilbündeln 300 und 310 geformt. Der Querschnitt der Teilbündel 300 und 310 ist an die Aufnahmefläche der zugehörigen Kamera 170 und 200 angepasst. Im vorliegenden Ausführungsbeispiel sind die Teilbündel 300 und 310 symmetrisch um die Strahlmittelachse 26 angeordnet. Sie müssen nicht zwingend aneinander angrenzen, d.h. es kann ein zentraler Bereich 48 zwischen ihnen ungenutzt bleiben. Fig.2 zeigt einen Querschnitt durch das Bündel hinter der Strahlformungsoptik 80 mit den Teilbündeln 300 und 310. Die symmetrische Aufteilung bewirkt, dass die Intensität in beiden Teilbündeln gleich ist. Alle Wellenlängenanteile sind über den gesamten Querschnitt und insbesondere zwischen den Teilbündeln 300 und 310 gleichmäßig verteilt.

Im Strahlengang hinter der Strahlformungsoptik ist ein teildurchlässiger Spiegel 90 angeordnet. Der teildurchlässige Spiegel 90 lässt 50% der Strahlungsintensität durch und reflektiert die verbleibende Strahlungsintensität. Die Teilbündel 300 und 310 treffen unter einem Winkel von 45° auf den teildurchlässigen Spiegel 90.

Die Teilbündel 300 und 310 werden teilweise an der Oberfläche des teildurchlässigen Spiegels 90 in Richtung auf ein Objektiv 100 reflektiert. Die reflektierten Strahlen 320 und 330 werden mit dem Objektiv 100 auf die Oberfläche 110 des Wafers 14 fokussiert. Dabei zeigt die Darstellung in Figur 1 nur die Fokussierung auf einen punktförmigen Messbereich der Oberfläche 110. Bei der Verwirklichung des Ausführungsbeispiels mit Zeilendetektoren 170 und 200 wird ein korrespondierender, streifenförmiger Messbereich beleuchtet und abgebildet. Die Längsrichtung der Detektorzeilen der Kameras 170 und 200 erstreckt sich senkrecht zur Darstellungsebene.

Die an dem Messbereich der Objektoberfläche 110 reflektierte Strahlung durchläuft erneut das Objektiv 100 in entgegengesetzter Richtung und wird in reflektierten Teilbündeln 410 und 420 gebündelt. Dabei wird das Licht aus Teilbündel 320 in Teilbündel 420 und das Licht aus Teilbündel 330 in Teilbündel 410 reflektiert. Ein Teil der reflektierten Lichtstrahlen wird erneut an dem Spiegel 90 reflektiert und aus dem Strahlengang entfernt. Der andere Teil der reflektierten Teilbündel 410 und 420 läuft gerade durch den Spiegel 90 und bildet parallele Teilbündel 360 und 370.

Die anderen, nicht am Spiegel 90 reflektierten Anteile der Teilbündel 300 und 310 passieren den teildurchlässigen Spiegel 90 als Teilbündel 340 und 350. Das in Figur 1 obere Teilbündel 340 trifft auf eine Lichtfalle 130. In der Lichtfalle 130 wird die Strahlung absorbiert. Es wird praktisch kein Licht reflektiert. Das parallele, in Figur 1 darunter liegende Teilbündel 350 trifft auf einen Planspiegel 120. An dem Planspiegel 120 wird das Bündel 350 als Bündel 400 in sich zurück reflektiert. Das so entstehende Bündel 400 trifft erneut auf den Spiegel 90. Dort wird es anteilig nach oben in Figur 1 reflektiert und überlagert das an der Oberfläche 110 reflektierte Bündel 360.

Das aus Bündel 410 stammende Licht interferiert nach Passieren des teildurchlässigen Spiegels 90 mit dem an dem Spiegel 90 reflektierten Licht des Bündels 400 im Lichtbündel 360. Das resultierende Lichtbündel 360 ist nunmehr durch die Interferenz der Lichtwellen in seiner Intensität moduliert. Die Modulation der Intensität hängt ab von dem Abstandsunterschied zwischen teildurchlässigem Spiegel 90 und Spiegel 120 einerseits sowie teildurchlässigem Spiegel 90 und Waferoberfläche 110 andererseits. Die Intensitätsmodulation erfolgt für alle drei enthaltenen Wellenlängen unabhängig voneinander. Figur 7 zeigt Beispiele von Intensitäten 54, 56 und 58 der Interferenzstrahlung auf allen drei Wellenlängen.

Das aus Bündel 420 stammende nicht am teildurchlässigen Spiegel 90 reflektierte Licht setzt seinen Weg als Bündel 370 ohne Interferenz fort. Es ist nicht intensitätsmoduliert. Die Intensität des Bündels 370 hängt von dem Reflexionsgrad des Messbereichs auf der Waferoberfläche 110, aber nicht von dem Höhenprofil des Messbereichs ab. Figur 7 zeigt Beispiele von Intensitäten 84, 86 und 88 der reflektierten Strahlung ohne Interferenz auf allen drei Wellenlängen. An Stellen mit Materialwechsel ändert sich entsprechend die reflektierte Intensität. Dies ist in Fig. 7 schematisch dargestellt. Ein Materialübergang 92, beispielsweise von einer Leiterbahn zu einem Kontaktpunkt, führt zu Sprüngen 94 in der reflektierten Intensität. Die originalen Interferometriesignale 54, 56, 58 bei den drei Wellenlängen können mit Hilfe der Reflexionssignale 84, 86 und 88 auf den drei Wellenlängen zu korrigierten Interferometriesignalen 62, 64, 66 für jede der drei Wellenlängen verarbeitet werden. Die korrigierten Interferometriesignale 62, 64, 66 enthalten nur noch die Abstandsinnformation aufgrund der Interferenz und keine Intensitätsänderung infolge des Reflexionsgrades der Waferoberfläche mehr.

Das Lichtbündel 370 wird durch einen Spiegel 140 als Bündel 390 auf ein Prisma 180 gelenkt. Das Prisma 180 dient der spektralen Aufspaltung des Lichtes aus Bündel 390 in die drei Wellenlängenkomponenten $\lambda_1$, $\lambda_2$ und $\lambda_3$. Die so aufgespaltenen spektralen Anteile aus dem Bündel 390 werden durch die Tubusoptik 190 auf eine TDI-Zeilenkamera 200 mit einer Vielzahl von nebeneinander angeordneten Pixeln fokussiert.

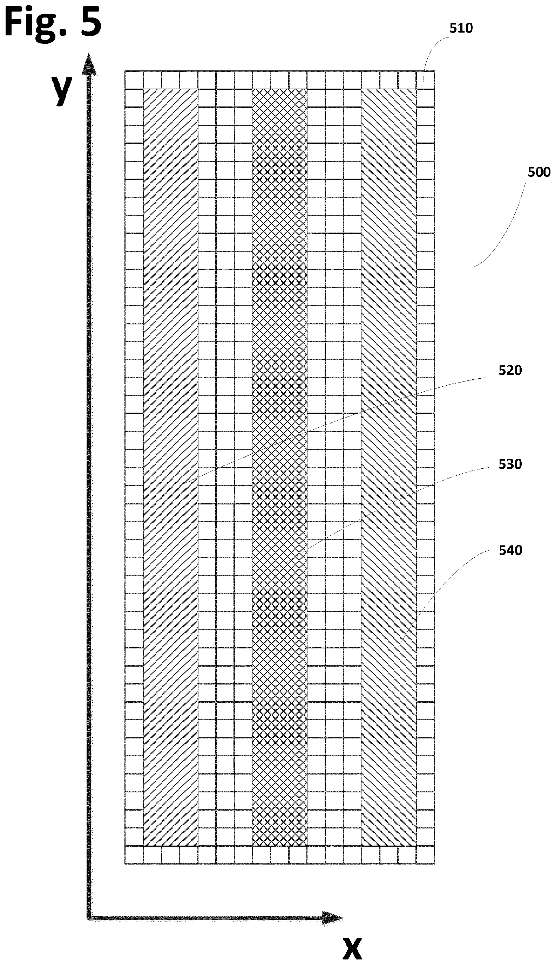

Die Kamera 200 weist mehrere Zeilen nebeneinander angeordneter Pixel auf. Ihre Detektorfläche 500 ist in Fig. 5 schematisch dargestellt. Die Detektorfläche 500 besteht aus Pixeln 510, die in mehreren Zeilen in Fig. 5 in Y-Richtung verlaufend angeordnet sind. Die Richtung quer zu den Zeilen wird hier mit X-Richtung bezeichnet. Die Detektorfläche besteht also aus X Zeilen mit Y Spalten. Die Zeilen stehen in Fig. 1 senkrecht zur Darstellungsebene. Die Kamera 200 wird wie eine Flächenkamera benutzt. Die aufgespaltenen spektralen Anteile aus dem Bündel 390 werden durch die Tubusoptik 190 auf die Detektorfläche 500 der Kamera 200 in den Zonen 520, 530 und 540 fokussiert. Durch Aufzeichnung der auf jedem Pixel der Kamera 200 auftreffenden Lichtintensität und anschließendes Aufsummieren der Signale der jeweiligen in x-Richtung nebeneinander liegenden Pixel in jeder der Zonen 520, 530 und 540 für sich werden somit für jede Spalte y drei Signale $a_1$, $a_2$ und $a_3$ erzeugt, die als Maß des Reflexionsgrades am jeweiligen Messbereich der Waferoberfläche 110 genutzt werden können.

Da der Spiegel 140 nur den Weg des Teilbündels 370 blockiert, trifft das durch Interferenz intensitätsmodulierte Bündel 360 als Bündel 380 ungehindert auf ein Prisma 150. Das Prisma 150 dient der spektralen Aufspaltung des Lichtes aus Bündel 380 in die drei Wellenlängenkomponenten $\lambda_1$, $\lambda_2$ und $\lambda_3$. Die so aufgespaltenen spektralen Anteile aus dem Bündel 380 werden durch die Tubusoptik 160 auf eine TDI-Zeilenkamera 170 mit einer Vielzahl von nebeneinander angeordneten Pixeln fokussiert.

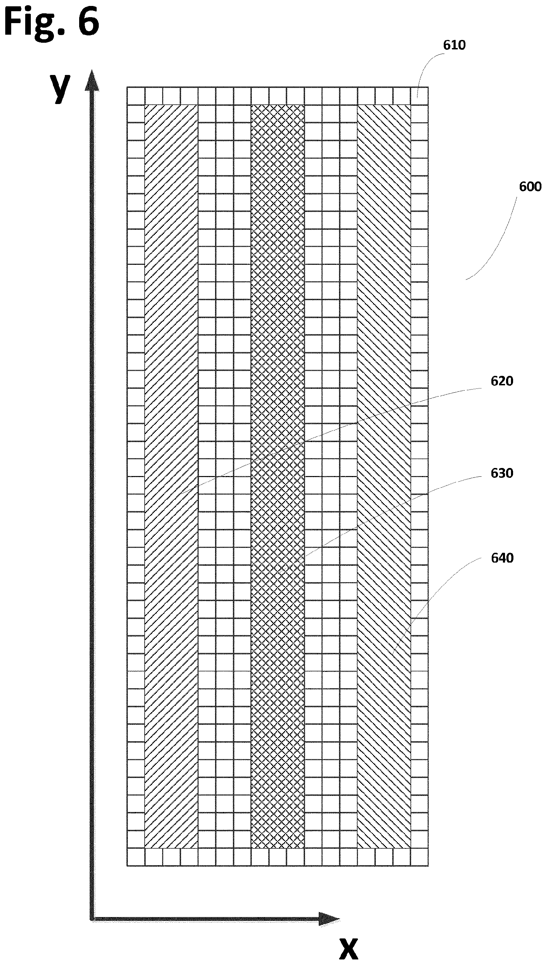

Die Abbildung erfolgt wie bereits für Kamera 200 beschrieben und ist in Fig. 6 dargestellt. Die Kamera 170 weist mehrere Zeilen nebeneinander angeordneter Pixel auf. Ihre Detektorfläche 600 besteht aus Pixeln 610 und ist in Fig. 6 schematisch dargestellt. Die Detektorfläche besteht aus X Zeilen mit Y Spalten. Die Zeilen stehen in Fig. 1 senkrecht zur Darstellungsebene. Die Kamera 170 wird wie eine Flächenkamera benutzt. Die aufgespaltenen spektralen Anteile aus dem Bündel 380 werden durch die Tubusoptik 150 auf die Detektorfläche 600 der Kamera 170 in den Zonen 620, 630 und 640 fokussiert. Durch Aufzeichnung der auf jedem Pixel der Kamera 170 auftreffenden Lichtintensität werden somit für jede Spalte y drei Signale $i_1$, $i_2$ und $i_3$ erzeugt. Die Signale $i_1$, $i_2$ und $i_3$ sind durch das Oberflächenprofil der Waferoberfläche 110 in ihrer Intensität moduliert. Die Signale an der Kamera 170 können so zur interferometrischen Bestimmung des Oberflächenprofils genutzt werden.

Signalauswertung

In der folgenden Beschreibung der Signalauswertung mittels Signalauswerteeinheit 72 ist die oben beschriebene Aufsummierung innerhalb der Kameras 170 und 200 für jede Spalte y in den Zonen 520, 530, 540, 620, 630 und 640 bereits vorausgesetzt und daher nicht dargestellt. Die Beschreibung erfolgt also so, dass die Zonen 520, 530, 540 bereits in jeder Spalte y zu jeweils eine Zeile mit dem Index x = 1, 2, 3 aufsummiert sind und für jede Spalte y die drei Signale $a_1$, $a_2$ und $a_3$ ergeben. In gleicher Weise sind die Zonen 620, 630 und 640 bereits in jeder Spalte y zu jeweils eine Zeile mit dem Index x = 1, 2, 3 aufsummiert und ergeben für jede Spalte y die drei Signale $i_1$, $i_2$ und $i_3$. Es wird daher im nachfolgenden immer nur von einem Pixel y in jeder Zeile x gesprochen, auch wenn das so bezeichnete Signal durch diese Aufsummierung aus den Signalen mehrerer Pixel entstanden ist. Der Index x bezeichnet die jeweilige Zeile und damit die Zugehörigkeit zu den drei Wellenlängen $\lambda_1$, $\lambda_2$ und $\lambda_3$. Der Index y bezeichnet die Pixelposition entlang der Zeile x. Die Verhältnisse sind in Fig. 5 und 6 schematisch dargestellt.

Zunächst wird das Dunkelsignal ermittelt. Weiterhin wird die Übertragungsfunktion der Optik 40, 50, 60, 70, 80, 90, 100, 150 und 180 und Kameras 170, 200 bestimmt. Bei der Dunkelsignalmessung wird bei ausgeschalteten Lasern 10, 20 und 30 das Signal d an jedem Pixel y der beiden Kamerazeilen 170 und 200 gemessen. Damit wird das sogenannte Dunkelsignal der Kamera bestimmt, welches für jede weitere Messung ein Offset darstellt und vom Signal abgezogen wird. Dies wird für beide Kameras 170 (Index z=1) und 200 (Index z=2) durchgeführt. Nachfolgend wird Index z = 1 für die Kamera 170 und Index z = 2 für die Kamera 200 verwendet.

$$d_{xyz} = ausgelesener\ Dunkel - Signalwert\ bei\ \lambda_x am\ Pixel\ y\ der\ Kamera\ z \qquad (1)$$

Zur Bestimmung der optischen und elektrischen Transferfunktion der Anordnung wird eine Hellsignalmessung h mit einem bekannten ebenen Objekt durchgeführt. Dazu wird der Messbereich auf der Waferoberfläche 110 durch ein ebenes Referenzstück mit bekanntem Reflexionsgrad ersetzt.

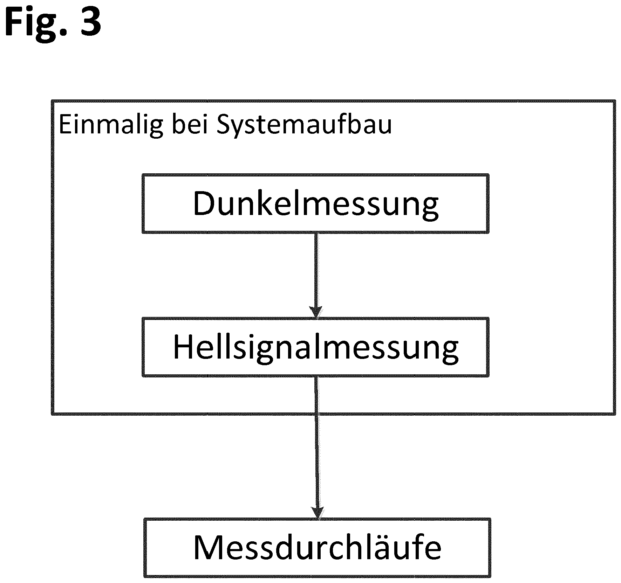

Das Signal h ist an jedem Detektorpixel eindeutig durch die Intensität der Lichtquelle, d.h. den Signalwert q, die Transferfunktion M, den Reflexionsgrad r, die Wegdifferenz der beiden interferierenden Lichtbündel 400 und 410 und das Dunkelsignal d bestimmt. Daher lässt sich bei bekannten Werten h, q, r, und d die Transferfunktion M für jede Wellenlänge $\lambda_x$, für jedes Pixel y und für beide Detektoren z als Funktion der Wegdifferenz ermitteln. Dies ist in Figur 3 schematisch dargestellt. Die Transferfunktion ist im Allgemeinen für jede Wellenlänge $\lambda_x$, jedes Pixel y und jede Kamera z unterschiedlich. Sie wird bestimmt durch die Empfindlichkeit der einzelnen Pixel, durch die Ausleuchtung, die Materialeigenschaften, die Beschichtungen und Abbildungsfehler der Optik. Die zusätzliche Abhängigkeit vom Abstand tritt nur für die Signale an der Kamera 170 auf, für den die Intensität durch die Interferenz der Bündel moduliert ist.

Für die Kamera 200 entfällt die Abstandabhängigkeit. Das Signal h der Hellreferenzmessung ist:

$$h_{xy2,href} = q_{xy,href} * M_{xy2} * r_{x,ref} * + d_{xy2} \tag{2}$$

Dabei sind:

$h_{xy2,href}$ = Messwert derReferenzmessung bei Wellenlänge $\lambda_x$ am Pixel y der Kamera 2 (Kamera für Reflexionxmessung)

$q_{xy,href}$ = eingestrahlte Lichtintensität der Referenzmessung bei Wellenlänge $\lambda_x$ am Pixel y

$M_{xy2}$ = Transferfunktion bei Wellenlänge $\lambda_x$ am pixel y der Kamera 2 (Kamera für Reflexionxmessung)

$r_{x,ref}$ = Reflexionscoeffizient der Referenzmessung (bekanntes Material) bei Wellenlänge $\lambda_x$

$d_{xy2}$ = ausgelesener Dunkel - Signalwert (kein Anregungs - Licht)bei $\lambda_x$ am Pixel y der Kamera 2

Zu beachten ist, dass die Dunkel-Signalwerte auch ohne die Einstrahlung von Licht "wellenlängenabhängig" sein können, da für die verschiedenen Wellenlängen unterschiedliche Detektorpixel genutzt werden - diese können unterschiedliche Dunkelzählwerte haben.

Daraus ergibt sich die Transferfunktion für die Kamera 200 zu:

$$M_{xy2} = \frac{h_{xy2,href} - d_{xy2}}{q_{xy,href} * r_{x,ref}} \tag{3}$$

Diese Transferfunktion wird im Messdurchlauf für die Berechnung des Reflexionsgrades des Messbereichs der Waferoberfläche 110 aus den an der Kamera 200 gemessenen Werten benutzt.

Für die Kamera 170 wirkt die die Abstandabhängigkeit durch die Interferenz der beiden Teilbündel 400 und 410. Das Signal h der Hellreferenzmessung ist:

$$h_{xy1,href}(l) = q_{xy,href} * M_{xy1}(l) * r_{x,ref} * + d_{xy1} \tag{4}$$

Dabei sind:

$h_{xy1,href}(l)$ = Messwert derReferenzmessung bei Wellenlänge $\lambda_x$ am Pixel y der Kamera 1 (Interferometer - Detektor) als Funktion der Wegdifferenz l

$q_{xy,href}$ = eingestrahlte Lichtintensität der Referenzmessung bei Wellenlänge $\lambda_x$ am Pixel y

$M_{xy1}(l)$ = Transferfunktion bei Wellenlänge $\lambda_x$ am Pixel y der Kamera 1 (Interferometer - Kamera) als Funktion der Wegdifferenz l

$r_{x,ref}$ = Reflexionscoeffizient der Referenzmessung (bekanntes Material) bei Wellenlänge $\lambda_x$

$$d_{xy1} = ausgelesener\ Dunkel - Signalwert\ (\ Anregungs - Licht)\ bei\ \lambda_x$$

$$am\ Pixel\ y\ der\ Kamera\ 1\ (Interferometer - Kamera) \tag{1}$$

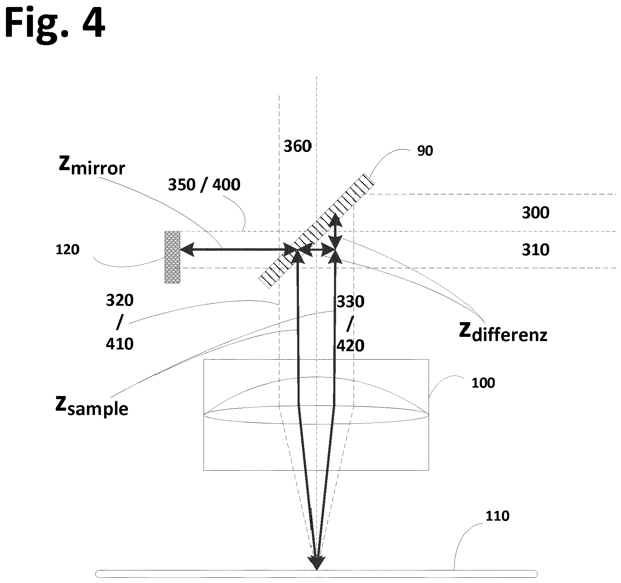

Das Argument l bezeichnet hierbei die Wegdifferenz, welche die beiden interferierenden Bündel 400 und 410 zueinander haben. Wie aus Fig. 4 ersichtlich ist diese Differenz gerade 2x $Z_{mirror}$ - $Z_{sample}$.

Der Wegunterschied $z_{differenz}$ hebt sich auf, da er von jedem Teilbündel genau einmal durchlaufen wird.

Zur Bestimmung des Abstandes des Messbereichs der Waferoberfläche von der Detektoranordnung können für Definition und Verwendung der Transferfunktion für die Kamera 170 zwei unterschiedliche Verfahren genutzt werden. Zum einen kann man die Transferfunktion M(l) in einen nicht-interferierten Faktor M$^{max}$ und die Interferenzwirkung zerlegt werden. Den Faktor M$^{max}$ erhält man, indem die Transferfunktion M(l) nur in Ihren Maxima bestimmt wird.

Die Intensitätsmodulation durch die Interferenz lässt sich dann direkt aus den Werten des Messdurchlaufs ermitteln. Dieser erste Weg ist nachfolgend weiter beschrieben. Zum anderen kann die Intensitätsmodulation durch die Interferenz in die Transferfunktion M(l) einbezogen werden. Dann wird M(1) in der Referenzmessung für den gesamten Arbeitsbereich als Funktion der Wegdifferenz der beiden Bündel und der Abstand der Waferoberfläche ermittelt. Die Abstandsdifferenz zur Waferoberfläche wird im Messdurchlauf durch den Vergleich der Transferfunktionswerte mit denen der als Referenz durchgeführten Hellsignalmessung ermittelt. Dieser Vergleich erfolgt jeweils für das Triplet der Wellenlängen $\lambda_x$ mit x = 1,2,3 und sucht den zu allen drei Wellenlängen passenden Abstand.

Für die Kamera 170 gilt die Transferfunktion (wobei sich die /2 im Nenner aus dem 2x Durchlauf durch die Differenz $Z_{mirror}$ - $z_{sample}$ ergibt):

$$M_{xy1}(l) = M_{xy1}^{max} * \gamma \cos\left[\frac{2\pi}{\lambda_x/2} * (z_{mirror} - z_{sample})\right] \tag{5}$$

Dabei sind:

$M_{xy1}$(l) = Transferfunktion bei Wellenlänge x am pixel y der Kamera 1 (Interferometer - Kamera) als Funktion der Wegdifferenz l

$M_{xy1}^{max}$ = maximaler Wert der Transferfunktion bei Wellenlänge x am pixel y der Kamera 1 (Interferometer - Kamera) - konstruktive Interferenz = Wegdifferenz l = ganzzahliges Vielfaches der Wellenlänge

$z_{mirror}$ = Abstand Teilerspiegel - Referenzspiegel des Interf erometers (siehe Abb. 4)

$z_{sample}$ = Abstand Teilerspiegel - Waferoberfläche (siehe Abb. 4)

Und für das Signal

$$h_{xy1,href}(l) = q_{xy,href} * M_{xy1}(l) * r_{x,ref} * + d_{xy1} \tag{6}$$

Bestimmt man hierfür für jede der drei Wellenlängen $\lambda_x$ mit x = 1,2,3 die maximalen Signalwerte, so lässt sich M$^{max}$ für jede Wellenlänge ermitteln:

$$M_{xy1}^{max} = \frac{h_{xy1,href}(l_{l\ für\ h_{max(x)}}) - d_{xy1}}{q_{xy,href} * r_{x,ref}}$$

Dabei sind:

$$l_{l\ für\ h_{max(x)}} = die\ Wegdifferenz, bei\ der\ das\ Signal\ maximal\ ist =$$

$$l\ ein\ ganzzahliges\ Vielfaches\ der\ Wellenlänge\ \lambda_x\ ist \tag{7}$$

Im Messdurchlauf mit der zu untersuchenden unbekannten Waferoberfläche 110 werden nunmehr gleichzeitig

die Detektorsignale $a_1$, $a_2$ und $a_3$ für jede Spalte y der Kamera 200 sowie die Signale $i_1$, $i_2$ und $i_3$ für jede Spalte y der Interferenz-Kamera 170 aufgenommen. Aus den Signalen der Kamera 200 wird der Reflexionsgrad $r_{xy,wafer}$ am Ort des auf den Pixel y abgebildeten Waferpunktes für die Wellenlänge $\lambda_x$ ermittelt.
Aus der Gleichung für das Signal:

$$a_{xy2} = q_{xy} * M_{xy2} * r_{xy,wafer} * + d_{xy2} \tag{8}$$

erhält man durch Umstellung den Ausdruck für den Reflexionsgrad:

$$r_{xy,wafer} = \frac{a_{xy2} - d_{xy2}}{q_{xy} * M_{xy2}} = \frac{a_{xy2} - d_{xy2}}{q_{xy}} * \frac{q_{xy,href} * r_{x,ref}}{h_{xy2,href} - d_{xy2}} \tag{9}$$

$$r_{xy,wafer} = \frac{a_{xy2} - d_{xy2}}{h_{xy2,href} - d_{xy2}} * \frac{q_{xy,href} * r_{x,ref}}{q_{xy}} \tag{10}$$

Dabei sind:

$a_{xy2}$ = Messwert der Reflexionsmessung bei Wellenlänge x am pixel y der Kamera 2 (Kamera für Reflexionxmessung)

$q_{xy}$ = eingestrahlte Lichtintensität der Messung bei Wellenlänge x am pixel y

$M_{xy2}$ = Transferfunktion bei Wellenlänge x am pixel y der Kamera 2 (Kamera für Reflexionxmessung)

$r_{xy,wafer}$ = Reflexionscoeffizient des wafers bei Wellenlänge x am Ort des Pixels y

$d_{xy2}$ = ausgelesener Dunkel - Signalwert (kein Anregungs - Licht) bei $\lambda_x$ am pixel y der Kamera 2

Auch hier sind die Dunkel-Signalwerte auch ohne Beleuchtung "wellenlängenabhängig", da für die verschiedenen Wellenlängen unterschiedliche Detektorpixel genutzt werden - diese können unterschiedliche Dunkelzählwerte haben.
Für das Signal an der Kamera 170 gilt:

$$i_{xy1} = q_{xy} * M_{xy1} * r_{xy,wafer} * + d_{xy1} \tag{11}$$

$$i_{xy1} = q_{xy} * M_{xy1}^{max} * \gamma \cos\left[\frac{2\pi}{\lambda_x/2} * (z_{mirror} - z_{sample})\right] * \frac{a_{xy2} - d_{xy2}}{q_{xy} * M_{xy2}} * + d_{xy1} \tag{12}$$

Dabei sind:

$i_{xy1}$ = Messwert der Interferometrie - Messung bei Wellenlänge x am Pixel y der Kamera 1 (Interferometer - Kamera)

$q_{xv}$ = eingestrahlte Lichtintensität der Messung bei Wellenlänge x am Pixel y

$M_{xy1}^{max}$ = maximaler Wert der Transferfunktion bei Wellenlänge x am Pixel y der Kamera 1 (Interferometer - Kamera) - konstruktive Interferenz = Wegdifferenz l = ganzzahliges Vielfaches der Wellenlänge

$r_{xy,wafer}$ = Reflexionscoeffizient des Wafers bei Wellenlänge x am Ort des Pixels y

$d_{xy1}$ = ausgelesener Dunkel - Signalwert (kein Anregungs - Licht) bei $\lambda_x$ am Pixel y der Kamera 1

Diese Signalgleichung hat lediglich die Wegdifferenz $\Delta z = z_{mirror} - z_{sample}$ als Unbekannte und muss für alle drei Wellenlängen $\lambda_x$ mit x = 1,2,3 gleichzeitig erfüllt sein. Da für die Profilmessung der Waferoberfläche 110 die Bestimmung von Δz ausreichend ist, kann Gleichung (12) vereinfacht werden.

$$i_{xy1} \; = \; q_{xy} * M_{xy1}^{max} * \gamma \; cos \left[ \frac{2\pi}{\lambda_x/2} * \Delta z \right] * \frac{a_{xy2} - d_{xy2}}{q_{xy} * M_{xy2}} * + d_{xy1} \qquad (13)$$

Durch geeignete Wahl der Wellenlängen $\lambda_1$, $\lambda_2$ und $\lambda_3$ für x = 1,2,3 lässt sich ohne Schwierigkeiten ein Arbeitsbereich von 0,5 mm mit eindeutiger Zuordnung des Intensitätsmesswerttripels $i_{xy1}$ zu einer Wegdifferenz Δz herstellen, was für eine Vielzahl von Profilmessaufgaben ausreichend ist. Dies ist in der eingangs genannten Veröffentlichung von K.Meiners-Hagen, R. Schrödel, F. Pollinger und A. Abou-Zeid erläutert. In der bekannten Anordnung werden beispielsweise die Wellenlängen 532, 632 und 780 verwendet und es wird ein Arbeitsbereich von 0,6 mm mit eindeutiger Zuordnung der Abstandsdifferenz erreicht.

Stellt man Δz in Einheiten der halben Wellenlänge dar so kann Δz für jede der drei Wellenlängen $\lambda_x$ als Summe aus ganzzahligen Anteilen $\delta_x$ und dem Rest $f_x$ dargestellt werden

$$\Delta z_x \; = \; \frac{\lambda_x}{2} * (\delta_x + f_x) \qquad (14)$$

Die gesuchte Wegdifferenz Δz ermittelt man aus den $\Delta z_x$ indem man das Triple $\delta_x$ ganzzahliger Anteile ermittelt, für welches die mittlere Abweichung der zugehörigen $\Delta z_x$ vom jeweiligen Mittelwert minimal ist. Das Ergebnis ist in Figur 7 mit 68 bezeichnet. Man erkennt, dass es das tatsächliche Profil 52 der Probenoberfläche gut wiedergibt.

In Fig.1 sind zur Vereinfachung der Darstellung die Strahloffsets, welche beim Durchgang der Strahlen durch eine planparallele Platte erzeugt werden weggelassen.

Die oben erläuterten Ausführungsbeispiele dienen der Illustration der in den Ansprüchen beanspruchten Erfindung. Merkmale, welche gemeinsam mit anderen Merkmalen offenbart sind, können in der Regel auch alleine oder in Kombination mit anderen Merkmalen, die im Text oder in den Zeichnungen explizit oder implizit in den Ausführungsbeispielen offenbart sind, verwendet werden. Maße und Größen sind nur beispielhaft angegeben. Dem Fachmann ergeben sich geeignete Bereiche aus seinem Fachwissen und brauchen hier daher nicht näher erläutert werden. Die Offenbarung einer konkreten Ausgestaltung eines Merkmals bedeutet nicht, dass die Erfindung auf diese konkrete Ausgestaltung beschränkt werden soll. Vielmehr kann ein solches Merkmal durch eine Vielzahl anderer, dem Fachmann geläufigen Ausgestaltungen verwirklicht werden. Die Erfindung kann daher nicht nur in Form der erläuterten Ausgestaltungen verwirklicht werden, sondern durch alle Ausgestaltungen, welche vom Schutzbereich der beigefügten Ansprüche abgedeckt sind.

Die Begriffe "oben", "unten", "rechts" und "links" beziehen sich ausschließlich auf die beigefügten Zeichnungen. Es versteht sich, dass beanspruchte Vorrichtungen auch eine andere Orientierung annehmen können. Der Begriff "enthaltend" und der Begriff "umfassend" bedeuten, dass weitere, nicht-genannte Komponenten vorgesehen sein können. Unter dem Begriff "im Wesentlichen", "vorwiegend" und "überwiegend" fallen alle Merkmale, die eine Eigenschaft oder einen Gehalt mehrheitlich, d.h. mehr als alle anderen genannten Komponenten oder Eigenschaften des Merkmals aufweisen, also bei zwei Komponenten beispielsweise mehr als 50%.

So kann anstelle von TDI-Zeilenkameras 170 und 200 auch eine Anordnung aus jeweils drei unabhängigen Zeilenkameras gewählt werden. Die für diese Ausführung erforderliche weitere räumliche Aufspaltung lässt sich durch Vergrößerung des jeweiligen Abstandes zwischen den Prismen 150, bzw. 180 und den Tubusoptiken 160, resp. 190 erreichen. Die Tubusoptiken 160, resp. 190 können dazu auch als 3 einzelne Optiken ausgebildet werden.

Der höhere technische Aufwand durch die Verdreifachung der Optiken und den Ersatz der insgesamt zwei TDI-Zeilenkameras gegen insgesamt 6 "einfache" Zeilenkameras ermöglicht eine deutliche Steigerung der Messgeschwindigkeit, da derartige Zeilenkameras mit Taktraten bis in Bereiche von 50 ... 100kHz verfügbar sind, was Höhenmesswertraten von über 1 Mrd. pro Sekunde ermöglicht. Selbstverständlich können auch insgesamt 6 TDI-Zeilenkameras eingesetzt werden, um die Signalqualität zu verbessern. Alternativ können auch übliche Flächenkameras eingesetzt werden.

Die obige Erläuterung der Berechnung des Oberflächenprofiles aus den gewonnen Signalen $a_x$, $r_x$ und $q_x$ mit x = 1, 2, 3 für die drei Wellenlängen $\lambda_1$, $\lambda_2$ und $\lambda_3$ wurde für jede Spalte y der Kameras 170 bzw. 200 ausgeführt. Es ist somit möglich entsprechend der Sensorgröße und Anordnung eine Vielzahl von Höhenpunkten des Profils gleichzeitig zu ermitteln. Für eine Zeilenkamera mit heute verfügbaren 16384 Pixeln pro Zeile sind dies entsprechend 16384 Höhenwerte für jeden Auslesetakt der Kameras.

Weiterhin kann man beider hier beschriebenen Anordnung die Zeilenkamera kontinuierlich relativ zum Wafer bewegen. Man erhält entsprechend der Taktgeschwindigkeit der Kameras entsprechend viele Zeilen mit Höheninformationen pro Zeiteinheit. Bei einem Takt der Kameras für den beschriebenen Flächenauslesungsmodus von z.B. 1 kHz erhält man also mehr als 16 Mio. Höhenwerte pro Sekunde. Es versteht sich ebenso, dass die drei Wellenlängen $\lambda_1$, $\lambda_2$ und $\lambda_3$ auf den Kamerasensoren auf unterschiedliche Zeilen x = 1, 2, 3 abgebildet werden.

Eine besonders geeignete Variante ist die Verwendung von Kombinationssensoren mehrerer TDI-Blöcke in einer Kamera. Eine solche Kamera wurde von Institut imec, Niederlande bekannt. Sie enthält 7 TDI-Blöcke die sich simultan betreiben und auslesen lassen. Bei Einsatz einer solchen Kamera erfolgt die Aufnahme der genutzten Wellenlängen die zu einer Zeile auf der Waferoberfläche gehören nacheinander. Während der erste TDI-Block den Zeilenbereich bei $\lambda_1$ aufnimmt, ermittelt der zweite TDI-Block das Signal bei $\lambda_2$ und der dritte TDI-Block das Signal $\lambda_3$. Die Vergleichsaufnahmen am Kamerasensor 200 sind in gleicher Weise gestaffelt. Die Berechnung ändert sich dadurch prinzipiell nicht. Es müssen lediglich die erhaltenen Signalbilder zeitlich gestaffelt entsprechend dem räumlichen Versatz der TDI-Blöcke zugeordnet und ausgewertet werden. Mit dieser Anordnung lasen sich besonders gut hohe Signalqualität entsprechend hoch aufgelöste und robuste Messung mit hoher Geschwindigkeit vereinbaren.

In weiteren Ausführungsvarianten kann die Zahl der eingesetzten Wellenlängen dem benötigten Arbeitsbereich angepasst werden. Für besonders kleine Arbeitsbereiche ist bereits eine Ausführung mit nur einer Wellenlänge möglich. Hierbei dient die erfindungsgemäße Nutzung der dargestellten zwei Kameraarme der Ermittlung des Reflexionsgrades der Probe und ermöglicht somit im Unterschied zu herkömmlichen Interferometrieanordnungen die Messung von Profilen mit wechselnden oder unbekannten Materialien. Für noch größere Arbeitsbereiche oder eine Verbesserung der Zuverlässigkeit durch Redundanz der Messung bietet sich die Ausdehnung auf mehr als 3 Wellenlängen an, die insbesondere mit der oben genannten Multi-Block-TDI-Kamera realisiert werden kann.

In weiteren Ausführungsvarianten kann die hier vorgestellte Kombination von Interferometrie-Kamera und Reflexions-Kamera auch in eine Nacheinanderausführung von zwei Messungen aufgeteilt bzw. in zwei nacheinander einzusetzenden Messköpfen realisiert werden.

Die Beleuchtung kann mit kontinuierlich strahlenden, monochromatischen Lichtquellen erfolgen. Laser sind dafür besonders geeignet. Andere breitbandigere Strahlquellen, welche mit entsprechenden Interferenzfiltern kombiniert sind können jedoch ebenfalls genutzt werden. Einzige Bedingung ist, dass die Kohärenzlänge des eingesetzten Lichtes für den zu realisierenden Arbeitsbereich ausreichend groß ist.

Das Ausführungsbeispiel in Fig. 1 verwendet 3 Laser als Lichtquellen und 2 TDI-Zeilenkameras (TDI = time delayed integration) im Flächen-Aufnahme-Mode als Sensoren. Es kann jedoch auch eine andere Anzahl von Lichtquellen sowie breitbandigere Lichtquellen in Kombination mit schmalbandigen Filtern benutzt werden. Ebenso können anstelle der TDI-Kameras auch Flächenkameras oder ein Set von mehreren Zeilenkameras benutzt werden.

Die Ausführung in Fig. 1 verwendet zur Strahlvereinigung der Lichtquellen dichroitische Spiegel. Es ist jedoch auch möglich andere Mittel, wie z.B. Y-Faserkoppler zu nutzen.

**Patentansprüche**

1. Anordnung zur Erfassung des Oberflächenprofils (52) einer Objektoberfläche (110) mittels interferometrischer Abstandsessung, enthaltend

   (a) eine Strahlungsquelle (10, 20, 30) zur Erzeugung von monochromatischem Licht (22, 24, 34);
   (b) eine optische Anordnung (80, 90, 100), mit welcher ein erster Teil des Lichts (310) aus jeder Strahlungsquelle zur Reflexion auf einen Messbereich auf der Objektoberfläche (110) leitbar und mit einem anderen, nicht an der Objektoberfläche (110) reflektierten Teil des Lichts (350) der Strahlungsquelle derart überlagerbar ist, dass Interferenz erzeugt wird;
   (c) eine Detektoranordnung (170) zum Detektieren der resultierenden Lichtstrahlen (380); und
   (d) eine Signalauswerteeinheit zur Auswertung der so detektierten Interferometriesignale (54, 56, 58);

   **dadurch gekennzeichnet, dass**

   (e) die optische Anordnung (80, 90, 100) Mittel (90) zum Abtrennen eines an dem gleichen Messbereich der Objektoberfläche (110) reflektierten Teils des Lichts (330) aus der Strahlungsquellen (10, 20, 30) ohne Interferenz aufweist;
   (f) eine Detektoranordnung (200) zum Detektieren der nicht-interferierenden Lichtstrahlen (370) vorgesehen ist; wobei
   (g) die von der Detektoranordnung (200) zum Detektieren der von nicht-interferierenden Lichtstrahlen erzeugten Reflexionssignale (84, 86, 88) der Signalauswerteeinheit zuführbar sind.

2. Anordnung nach Anspruch 1, **dadurch gekennzeichnet, dass**

(a) zusätzlich zu der ersten Strahlungsquelle (30) zur Erzeugung von monochromatischem Licht (22) bei einer ersten Wellenlänge, wenigstens eine weitere Strahlungsquelle (10, 20) zur Erzeugung von monochromatischem Licht (34, 28) bei wenigstens einer weiteren, zur ersten Wellenlänge unterschiedlichen Wellenlänge vorgesehen ist;

(b) mit der optischen Anordnung (80, 90, 100) ein erster Teil (310) des Lichts aus jeder Strahlungsquelle (10, 20, 30) zur Reflexion auf einen Messbereich auf der Objektoberfläche (110) leitbar und mit einem anderen, nicht an der Objektoberfläche (110) reflektierten Teil (350) des Lichts der jeweils zugehörigen Strahlungsquelle derart überlagerbar ist, dass Interferenz erzeugt wird;

(c) Mittel (150) zum Trennen der resultierenden Lichtstrahlen (380) unterschiedlicher Wellenlängen vorgesehen sind;

(d) mit der Detektoranordnung (170) die nach Wellenlängen getrennten, resultierenden Lichtstrahlen detektierbar sind;

(e) die optische Anordnung (80, 90, 100) Mittel (140) zum Abtrennen eines an dem gleichen Messbereich der Objektoberfläche reflektierten Teils (370) des Lichts aus allen Strahlungsquellen (10, 20, 30) ohne Interferenz aufweist;

(f) Mittel (180) zum Trennen der reflektierten, nicht-interferierenden Lichtstrahlen (390) unterschiedlicher Wellenlängen vorgesehen sind; und

(g) mit der Detektoranordnung (200) die nach Wellenlängen getrennten, nicht-interferierenden Lichtstrahlen detektierbar sind; wobei

(h) die von der Detektoranordnung (200) zum Detektieren der von nicht-interferierenden Lichtstrahlen erzeugten Reflexionssignale (84, 86, 88) der Signalauswerteeinheit (72) zuführbar sind.

**3.** Anordnung nach Anspruch 1 oder 2, **dadurch gekennzeichnet, dass** eine Aufnahmevorrichtung (16) zur Aufnahme eines Objekts in Form eines Wafers (14) oder eines anderen flachen Objekts mit einer ebenen Objektoberfläche (110) vorgesehen ist.

**4.** Anordnung nach einem der vorgehenden Ansprüche, **dadurch gekennzeichnet, dass** die Strahlungsquellen (10, 20, 30) von Lasern gebildet sind.

**5.** Anordnung nach einem der vorgehenden Ansprüche 2 bis 4, **dadurch gekennzeichnet, dass** die Strahlungsquellen (10, 20, 30) Licht bei Wellenlängen erzeugen, bei denen keine Wellenlänge ein ganzzahliges Vielfaches der Wellenlänge einer der anderen Strahlungsquellen ist.

**6.** Anordnung nach einem der vorgehenden Ansprüche 2 bis 5, **dadurch gekennzeichnet, dass** die Mittel zum Trennen von Lichtstrahlen unterschiedlicher Wellenlängen ein oder mehrere Prismen (150, 180), ein oder mehrere Spektralgitter, andere spektral dispergierende Mittel oder deren Kombinationen umfassen.

**7.** Anordnung nach einem der vorgehenden Ansprüche, **dadurch gekennzeichnet, dass** die Detektoranordnung (200) zum Detektieren der nach Wellenlängen getrennten, nicht-interferierenden Lichtstrahlen von einer anderen Detektoranordnung gebildet ist, als die Detektoranordnung (170) zum Detektieren der nach Wellenlängen getrennten, resultierenden Lichtstrahlen.

**8.** Anordnung nach einem der vorgehenden Ansprüche, **dadurch gekennzeichnet, dass** jede der Detektoranordnungen (170, 200) eine Detektorzeile und Antriebsmittel zur Bewegung der Detektorzeile in der Detektionsebene senkrecht zur Längsrichtung der Detektorzeile umfasst.

**9.** Anordnung nach Anspruch 8, **dadurch gekennzeichnet, dass** jede der Detektoranordnungen (170, 200) eine Time Delayed Integration (TDI) Zeilenkamera umfasst.

**10.** Anordnung nach einem der vorgehenden Ansprüche, **gekennzeichnet durch** wenigstens einen dichroitischen Spiegel (40, 50) und/oder wenigstens einen Y-Faserkoppler zum Vereinigen des Lichts (22, 28, 34) aus den Strahlungsquellen (10, 20, 30) in einem gemeinsamen Bündel (210).

**11.** Anordnung nach einem der vorgehenden Ansprüche, **dadurch gekennzeichnet, dass** die optische Anordnung (80, 90, 100) zur Erzeugung von Interferenz einen halbdurchlässigen Spiegel (90) umfasst, welcher einen Teil (320, 330) der Strahlung (300, 310) an einer ersten Oberfläche in Richtung auf die Objektoberfläche reflektiert und einen anderen Teil (340, 350) der Strahlung durchlässt.

**12.** Anordnung nach einem der vorgehenden Ansprüche, **dadurch gekennzeichnet, dass** die Mittel zum Abtrennen eines reflektierten Teils des Lichts ohne Interferenz eine Lichtfalle (130) oder einen Spiegel umfassen, welche einen Teil (340) des Bündels des nicht an der Objektoberfläche (110) reflektierten Lichts (320, 330) aus dem Strahlengang entfernt, während ein anderer Teil (400) des Bündels des nicht an der Objektoberfläche (110) reflektierten Lichts mit einem Teil (410) des an der Objektoberfläche (110) reflektierten Lichts überlagert wird und ein Spiegel (140) vorgesehen ist, mit welchem ein anderer Teil (420) des an der Objektoberfläche (110) reflektierten Lichts vom resultierenden Lichtstrahl (360, 370) trennbar ist.

Fig. 1

**Fig. 2**

48

300

310

26

# Fig. 3

Einmalig bei Systemaufbau

Dunkelmessung

Hellsignalmessung

Messdurchläufe

# Fig. 4

$Z_{mirror}$

350 / 400

360

90

300

310

120

320
/
410

330
/
420

$Z_{differenz}$

$Z_{sample}$

100

110

**Fig. 5**

# Fig. 6

# Fig. 7

**Europäisches Patentamt**

**European Patent Office**

**Office européen des brevets**

# EUROPÄISCHER RECHERCHENBERICHT

Nummer der Anmeldung

EP 17 19 8267

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2014/176693 A1 (PODOLEANU ADRIAN [GB]) 26. Juni 2014 (2014-06-26) | 1,3-11 | INV. G01B11/24 G01B9/02 |
| A | * Zusammenfassung; Abbildungen 1,7 * * Absätze [0058] - [0062], [0096] - [0098], [0186] - Absatz [0196] * ----- | 2,12 | |
| X | US 2012/044455 A1 (HIROSE FUTOSHI [JP]) 23. Februar 2012 (2012-02-23) * Zusammenfassung; Abbildung 1 * * Absatz [0017] - Absatz [0023] * ----- | 1,3-11 | |
| A | US 2016/102970 A1 (JO TAE YONG [KR] ET AL) 14. April 2016 (2016-04-14) * das ganze Dokument * ----- | 1-12 | |
| A,D | K.MEINERS-HAGEN; R. SCHRÖDEL; F. POLLINGER; A. ABOU-ZEID: "Multi-Wavelength Interferometry for Length Measurements Using Diode Lasers", MEASUREMENT SCIENCE REVIEW, Bd. 9, Nr. 1, 2009, XP002779678, * das ganze Dokument * ----- | 1-12 | |

RECHERCHIERTE SACHGEBIETE (IPC)

G01B

Der vorliegende Recherchenbericht wurde für alle Patentansprüche erstellt

| Recherchenort | Abschlußdatum der Recherche | Prüfer |
|---|---|---|
| München | 28. März 2018 | Stanciu, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 17 19 8267

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-03-2018

| Im Recherchenbericht angeführtes Patentdokument | Datum der Veröffentlichung | Mitglied(er) der Patentfamilie | Datum der Veröffentlichung |
|---|---|---|---|
| US 2014176693 A1 | 26-06-2014 | US 2011043661 A1<br>US 2014176693 A1<br>WO 2009098516 A2 | 24-02-2011<br>26-06-2014<br>13-08-2009 |
| US 2012044455 A1 | 23-02-2012 | CN 102421351 A<br>EP 2427094 A1<br>JP 5743411 B2<br>JP 2010279681 A<br>KR 20120024673 A<br>US 2012044455 A1<br>WO 2010128630 A1 | 18-04-2012<br>14-03-2012<br>01-07-2015<br>16-12-2010<br>14-03-2012<br>23-02-2012<br>11-11-2010 |
| US 2016102970 A1 | 14-04-2016 | CN 105190227 A<br>JP 6138286 B2<br>JP 2016510113 A<br>KR 20140114156 A<br>TW 201437604 A<br>US 2016102970 A1<br>WO 2014148781 A1 | 23-12-2015<br>31-05-2017<br>04-04-2016<br>26-09-2014<br>01-10-2014<br>14-04-2016<br>25-09-2014 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **K.MEINERS-HAGEN ; R. SCHRÖDEL ; F. POLLINGER ; A. ABOU-ZEID.** Multi-Wavelength Interferometry for Length Measurements Using Diode Lasers. *Measurement Science Review,* 2009, vol. 9 (1

- **K. MEINERS-HAGEN et al.** Multi-Wavelength Interferometry for Length Measurements Using Diode Lasers. *dargestellt*